# EUROPEAN PATENT APPLICATION

(11) **EP 1 597 973 A1**
(43) Date of publication of application: **23.11.2005**
(21) Application number: 04011749.1
(22) Date of filing: 18.05.2004
(51) Int. Cl.: A23D 7/01, A23L 1/30, A23L 1/22, A61K 9/16, A61K 9/51

(54) **Oil-in-water emulsion for delivery**

(71) Applicant: NESTEC S.A., 1800 Vevey (CH)
(72) Inventor: The designation of the inventor has not yet been filed
(74) Representative: Thomas, Alain

(57) **Abstract**

The present invention concerns an oil-in-water emulsion wherein the oil droplets of a diameter in the range of 5 nm to hundreds of micrometers exhibit a nano-sized structurisation with hydrophilic domains with a diameter size in the range of 0.5 to 50 nm and being formed by a lipophilic additive.

## Description

### FIELD OF INVENTION

The present invention concerns an oil-in-water emulsion in which the dispersed oil droplets exhibit a self-assembled nano-structure.

### BACKGROUND OF THE INVENTION

### Emulsions in Industry

Emulsions are common colloidal systems in many industrial products such as Food, Cosmetics or Pharmaceutical preparations. They are made of oil droplets which are dispersed in an aqueous continuous phase. The dispersed oil droplets are stabilised by surface active molecules which form an adsorption layer around the oil droplets. In order to disperse the oil phase into the continuous aqueous phase, homogenisers are used which enable to produce oil droplets in various size ranges (from ca 100 nm up to several hundreds of micrometers). The formation of the adsorption layer around the oil droplets during the homogenisation step renders the oil droplets kinetically stable against coalescence, flocculation or coagulation. The surface active material used in oil-in-water based emulsion products can either be low molecular weight hydrophilic surfactants, such as polysorbates, lysolecithins, monoglyceride derivatives etc, or polymers, such as proteins, e.g. gelatin or from milk, soya, or polysaccharides, such as gum arabic or xanthan or mixtures thereof.

Oil-in-water emulsion based products are ubiquitous in - Food, Cosmetics or Pharmaceuticals. Prominent oil-in-water emulsion-based food products are for instance milk, mayonnaise, salad dressings, or sauces. Prominent oil-in-water emulsion-based products used in cosmetical or pharmaceutical Industry are lotions, creams, milks, pills, tablets etc. The oil droplets in such products are usually made of, for instance, triglycerides, diglycerides, waxes, fatty acid esters, fatty acids, alcohols, mineral oils, or hydrocarbons.

Emulsions are used either as a starting material, intermediate or final product or as an additive to a final product.

### Emulsions for delivery

One of the uses of emulsions in Industry is to deliver active compounds, such as, flavours, vitamins, antioxidants, neutraceuticals, phytochemicals, drugs, etc. Administrating of the active components requires the use of an appropriate vehicle for bringing an effective amount of the active component into the desired place of action. Oil-in-water emulsions are commonly used delivery systems since they take advantage of the increased solubility of fat soluble active compounds in the oil. In EP 1116515, as an example of using emulsions for controlling flavour performance, a hydrophobic active ingredient, such as a flavour component, is mixed into a matrix via an extruder in form of an oil-in-water emulsion in order to increase the stability of the introduced active ingredient during further processing of the product. In WO 00/59475, as an example for a pharmaceutical oil-in-water emulsion, a composition and method for improved delivery of ionizable hydrophobic therapeutic agents is described, which are mixed together with an ionizing agent, a surfactant and a triglyceride to form an oil-in-water emulsion. WO 99/63841, as an example for the use of emulsions in the food area, describes compositions comprising phytosterol having enhanced solubility and dispersability due to the formation of an emulsion or a microemulsion.

Furthermore, if the oil droplets in the oil-in-water emulsions are ultra small, e.g. in the order of 1-50 nm radius, the emulsion is called microemulsion or nano-emulsion. These emulsions are clear and thermodynamically stable and, therefore, are for the man skilled in the art different from ordinary emulsions the latter being thermodynamically unstable and generally turbid.

Another type of a delivery system are mesophase particles described by Gustafsson et al. (Gustafsson, J.; Ljusberg-Wahren, H.; Almgren, M.; Larsson, K.; Langmuir (1997), 13, 6964-6971).

### DESCRIPTION OF THE INVENTION

As state of the art, dispersed oil droplets in oil-in-water emulsions are used as vehicles for lipophilic molecules which are dissolved in the oil droplets. The drawback of this kind of emulsions as a vehicle system is that they are not able to host hydrophilic or slightly amphiphilic molecules alone or in combination with lipophilic compounds due to the lack of solubility of the active agents in the oil phase. Especially difficult is the delivery of amphiphilic or hydrotrope compounds because of their tendency to disturb the stabilizing function of the emulsifiers, and, as a consequence, they can destabilize the emulsion.

The present invention is based on the finding of novel nano-sized self-assembled structures in the interior of ordinary oil droplets. The structures are formed by the addition of a lipophilic additive (LPA). Such structures can solubilize not only lipophilic components but also in the same time hydrophilic and/or slightly amphiphilic or hydrotropic components. The nano-sized self-assembled structures inside the oil droplets mainly consist of nano-sized and thermodynamically stable water droplets or water channels. The nano-sized water droplets or channels, which are formed spontaneously (thermodynamically driven) inside the emulsion droplets can be of the size of 0.5-50nm. Due to their ultra-small size, they also exhibit a large surface area which is a suitable location for the solubilization of a variety of different compounds.

The emulsions of this invention are clearly distinguished from emulsions commonly known as water-oil-water double emulsions. w/o/w (water/oil/water) double emulsions are oil-in-water emulsions, in which the oil droplets contain micron-sized water droplets (Garti, N.; Bisperink, C.; Curr. Opinion in Colloid & Interface Science (1998), 3, 657-667). The water droplets inside the dispersed double emulsion oil droplets are prepared by mechanical energy input, e.g., homogenisation, and, as a consequence, are thermodynamically unstable and not self-assembled. The emulsions of this invention can easily be distinguished from ordinary w/o/w double emulsions since the formation of the nano-sized self-assembled structure inside the oil droplets of the emulsion of this invention is spontaneous and thermodynamically driven, and the mean diameter of the water droplets or channels is below 100 nm.

Thus the invention is directed towards oil droplets which contain a nano-sized self-assembled structure. The notion 'self-assembly' or 'self-organization' refers to the spontaneous formation of aggregates (associates) or nano-structures by separate molecules. Molecules in self-assembled structures find their appropriate location based soley on their structural and chemical properties due to given intermolecular forces, such as hydrophobic or electrostatic forces (Evans, D.F.; Wennerström, H. (Eds.); 'The Colloidal Domain', Wiley-VCH, New York, (1999)). The result of self-assembly does not depend on the process itself and corresponds to a state of minimum energy (stable equilibrium) of the system.

The spontaneous formation of the nano-sized self-assembled structure inside the oil droplets is realised by different ways. One way is to add a lipophilic additive (LPA), that allows the spontaneous formation of the nano-sized self-assembled structure, to the oil phase prior to the homogenisation step. The other way is to add the lipophilic additive (LPA) to the emulsion product after the homogenisation step. In this case the lipophilic additive will dissolve into the oil droplets and will lead to the spontaneous formation of the nano-sized self-assembled structure inside the oil droplets. As homogensiser, an ordinary industrial or lab-scale homogeniser, such as a Rannie piston homogeniser, a Kinematica rotor stator mixer, a colloid mill, a Stephan mixer, a Couette shear cell or a membrane emulsification device can be taken. Moreover, ultrasound, steam injection or a kitchen mixer are also suitable to produce the emulsion described in this invention. The spontaneous formation of the nano-sized self-assembled structure inside the oil droplets is independent on the energy intake, used to make the emulsion, and the sequence of LPA addition.

Another route for making the emulsion of this invention is the use of hydrotropes or water structure breakers, or spontaneous emulsification which can be chemically or thermodynamically driven (Evans, D.F.; Wennerström, H. (Eds.); 'The Colloidal Domain', Wiley-VCH, New York, (1999)) .

Another route for making the emulsion of this invention is by combining the spontaneous formation of the nano-sized self-assembled structure inside the oil droplets with the spontaneous formation of the oil droplets, i.e., the entire emulsion of this invention, by adding diblockcopolymer- or apoprotein-like biopolymers, such as protein-polysaccharide conjugates or coacervates or protein-polysaccharide, protein-protein, or polysaccharide-polysaccharide hybrides or mixtures of polymers or biopolymers.

### Emulsion formulation

The present invention concerns an oil-in-water emulsion, wherein the oil droplets (having a diameter in the range of 5 nm to hundreds of micrometers) exhibit a nano-sized structurisation with hydrophilic domains having a diameter in a range of 0.5 to 50 nm and being formed by a lipophilic additive (LPA). The LPA can be added as such or made in situ by chemical, biochemical, enzymatic or biological means.

More precisely, the present invention is directed to oil-in-water emulsions comprising dispersed oil droplets having a nano-sized self-assembled structured interior comprising
(i) an oil selected from the group consisting of mineral oils, hydrocarbons, vegetable oils, waxes, alcohols, fatty acids, mono-, di-, tri-acylglycerols, essential oils, flavouring oils, lipophilic vitamins, esters, neutraceuticals, terpins, terpenes and mixtures thereof,
(ii) a lipophilic additive (LPA) or mixtures of lipophilic and hydrophilic additives, having a resulting HLB value(Hydrophilic-Lipophilic Balance) lower than about 10.
(iii) hydrophilic domains in form of droplets or channels comprising of water or a non-aqueous polar liquid, such as a polyol,
and
an aqueous continous phase, which contains emulsion stabilizers or emulsifiers.

The lipophilic additive (mixture) is selected from the group consisting of fatty acids, sorbitan esters, propylene glycol mono- or diesters, pegylated fatty acids, monoglycerides, derivatives of monoglycerides, diglycerides, pegylated vegetable oils, polyoxyethylene sorbitan esters, phospholipids, cephalins, lipids, sugar esters, sugar ethers, sucrose esters, polyglycerol esters.

According to the first embodiment of the invention the oil-in-water emulsion exhibits oil droplets having an internal structure taken from the group consisting of the L₂ structure or a combination of a L2 and oil structure (microemulsion or isotropic liquid droplets)in the temperature range of 0°C to 100°C.

According to the second embodiment of the invention, the oil-in-water emulsion exhibits oil droplets having a L2 structure (microemulsion or isotropic liquid droplets) in the temperature range of 0°C to 100°C.

According to a third embodiment of the invention, the oil-in-water emulsion exhibits oil droplets having an internal structure taken from the group consisting of the L2 structure (microemulsion or isotropic liquid droplets) or liquid crystalline (LC) structure (e.g. reversed micellar cubic, reversed bicontinuous cubic or reversed hexagonal) and a combination thereof in the temperature range of 0°C to 100°C.

According to the fourth embodiment of the invention, the oil-in-water emulsion exhibits oil droplets having a LC internal structure in the temperature range of 0°C to 100°C.

According to a fifth embodiment of the invention, the oil-in-water emulsion exhibits oil droplets having an internal structure taken from the group consisting of the L3 structure, a combination of the L2 and L3 structure , a combination of the lamellar liquid crystalline (Lα) and L2 structure, and a combination of the lamellar crystalline and L2 structure in the temperature range of 0°C to 100°C.

According to a sixth embodiment of the invention, the oil-in-water emulsion exhibits oil droplets having an internal structure which is a combination of the previously described structures in the temperature range of 0°C to 100°C.

All above mentioned internal structures can be without doubt determined by SAXS analysis and by cryo-TEM (Qiu et al. Biomaterials (2000) **21** 223-234, Seddon. Biochimica et Biophysica Acta (1990) **1031** 1-69, Delacroix et al. J. Mol. Biol. (1996) **258** 88-103, Gustafsson et al. Langmuir (1997) **13:** 6964-6971, Portes. J. Phys: Condens Matter (1992) **4:** 8649-8670).

For certain applications, the use of temperatures higher than 100°C (for exemple retorting temperature) is also possible and is covered by the present invention.

The lipophilic additive can also be mixed with a hydrophilic additive (having a HLB larger than 10) up to the amount that the mixture is not exceeding the overall HLB of the mixture of 10. The additive (mixture) can also be made in-situ by chemical, biochemical, enzymatic or biological means.

The emulsion is stabilized by an emulsifier suitable to stabilize ordinary oil-in-water emulsion droplets. This emulsifier is selected from the group of consisting of low molecular weight surfactants having a HLB>8, gelatin, proteins from e.g. milk or soya, peptides, protein hydrolisates, block co-polymers, surface active hydrocolloids such as gum arabic, xanthan gum, diblockcopolymer- or apoprotein-like biopolymers, such as protein-polysaccaride conjugates or coacervates, or protein-polysaccharide, protein-protein, or polysaccharide-polysaccharide hybrids, conjugates or coacervates or mixtures of polymers and biopolymers.

Various active components can be solubilized in the nano-sized self-assembled structured interior of the oil droplets. They can be oil-soluble, oil non-soluble or water soluble components selected from the group consisting of nutraceuticals, such as lutein, lutein esters, β-carotene, tocopherol, tocopherol acetate, tocotrienol, lycopene, Co-Q₁₀, flax seed oil, lipoic acid, vitamin B₁₂, vitamin D, α-and γ-polyunsaturated fatty acids, phytosterols, flavonoids, vitamin A etc., food supplements, food additives, plant extracts, medicaments, peptides, proteins or carbohydrates, aroma and flavours.

In the oil-in-water emulsion according to the invention,the lipophilic additive is selected from the group consisting of myristic acid, oleic acid, lauric acid, stearic acid, palmitic acid, PEG 1-4 stearate, PEG 2-4 oleate, PEG-4 dilaurate, PEG-4 dioleate, PEG-4 distearate, PEG-6 dioleate, PEG-6 distearate, PEG-8-dioleate, PEG-3-16 castor oil, PEG 5-10 hydrogenated castor oil, PEG 6-20 corn oil, PEG 6-20 almond oil, PEG-6 olive oil, PEG-6 peanut oil, PEG-6 palm kernel oil, PEG-6 hydrogenated palm kernel oil, PEG-4 capric/caprylic triglyceride, mono, di, tri, tetraesters of vegetable oil and sorbitol, pentaerythrityl di, tetra stearate, isostearate, oleate, caprylate or caprate, polyglyceryl-3 dioleate, stearate, or isostearate, plyglyceryl 4-10 pentaoleate, polyglyceryl 2-4 oleate, stearate, or isostearate, polyglyceryl 4-10 pentaoleate, polyglycewryl-3 dioleate, polyglyceryl-6 dioleate, polyglyceryl-10 trioleate, polyglyceryl-3 distearate propylene glycol mono- or diesters of C₆ to C₂₀ fatty acid, monoglycerides of C₆ to C₂₀ fatty acid, lactic acid derivatives of monoglycerides, lactic acid dericatives of diglycerides, diacetyl tartaric ester of monoglycerides, triglycerol monostearate cholesterol, phytosterol, PEG 5-20 soya sterol, PEG-6 sorbitan tetra, hexasterarate, PEG-6 sorbitan tetraoleate, sorbitan monolaurate, sorbitan monopalmitate, sorbitan mono trioleate, sorbitan mono and tristearate, sorbitan monoisostearate, sorbitan sesquioleate, sorbitan sesquistearate, PEG-2-5 oleyl ether, POE 2-4 lauryl ether, PEG-2 cetyl ether, PEG-2 stearyl ether, sucrose distearate, sucrose dipalmitate, ethyl oleate, isopropyl myristate, isopropyl palmitate, ethyl linoleate, isopropyl linoleate, poloxamers, phospolipids, lecithins, cephalins, oat lipids and lipophilic amphiphilic lipids from other plants; and mixtures thereof.

The oil-in-water emulsion according to the invention is normally in liquid form. According to another embodiment of the invention, the emulsion is dried and is available in powder form.

The oil-in-water emulsion according to the invention is either a final product, a starting material or an additive.

The emulsion described in this invention is a novel type of emulsion which we name 'ISAMULSION' to describe the specific nature of the droplets containing a structure being Internally Self-Assembled, and to exclude the emulsion of thin invention from ordinary oil-in-water emulsions, including nano- and microemulsions, in which the oil droplets do not have a nano-sized self-assembled structure. The ISAMULSION droplets are basically oil droplets which have a nano-sized self-assembled structure. This structure can be of a lamellar liquid crystalline, or a lamellar crystalline or of a reversed nature comprising the L₂, the L₃, the microemulsion, the isotropic liquid phase, the hexagonal, the micellar cubic, or the bicontinous cubic phase. The structures in the oil phase can appear as a single nano-structure or as a mixture of different nano-structures.

### BRIEF DESCRIPTION OF THE DRAWINGS

Fig. 1 shows the structure found in the interior of the ISAMULSION oil droplets,
Fig. 2 shows a Cryo-TEM micrograph of a typical ISAMULSION,
Fig. 3 shows the small angle X-ray scattering (SAXS) pattern of an ISAMULSION, of the bulk oil phase (nano-structured by LPA), which was used for making the ISAMULSION and of the corresponding ordinary emulsion (without LPA, without nano-structure).

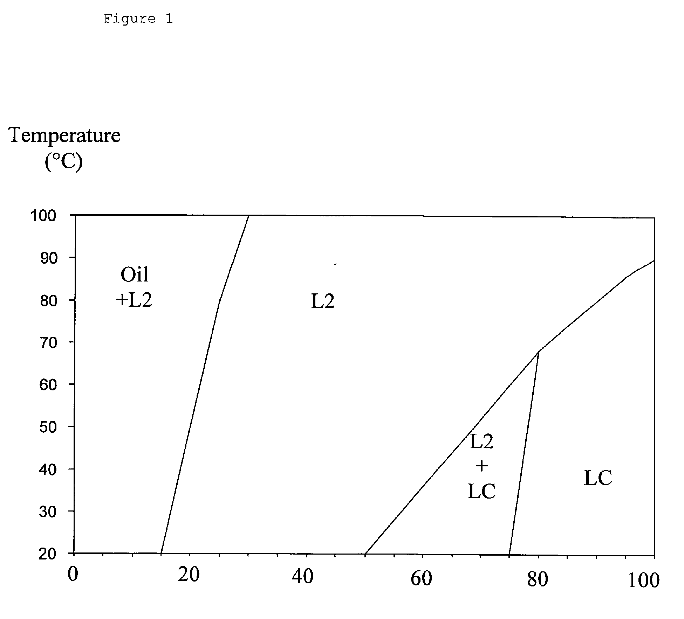

Figure 1 represents the typical sequence of structures found in the interior of the dispersed oil droplets of the ISAMULSION as a function of the content of the lipophilic additive in % (%LPA= 100*LPA/(LPA+OIL )) and temperature. L2 denotes a microemulsion like structure; LC denotes the existence of a liquid crystalline phase. As the Figure 1 shows, a defined nano-sized self-assembled structure is formed for a given temperature and a specific amount of added lipophilic additive (LPA) inside the oil droplets (for a closer description of the mentioned structures, see Evans, D.F.; Wennerström, H. (Eds.); 'The Colloidal Domain', Wiley-VCH, New York, (1999)). This allows us to precisely control the amount of water, the amount of internal interface and the size dimension of the self-assembled nano-structure. Depending on the oil-type and type of lipophilic additive, the minimum amount needed to initiate the spontaneous formation of the self-assembled internal droplet structure is between 0.5 and 5 wt-% on the total emulsion product.

The internal nano-sized self-assembled structure of the oil droplets in the emulsion can be detected by means of Cryo Transmission Electron Microscopy or SAXS.

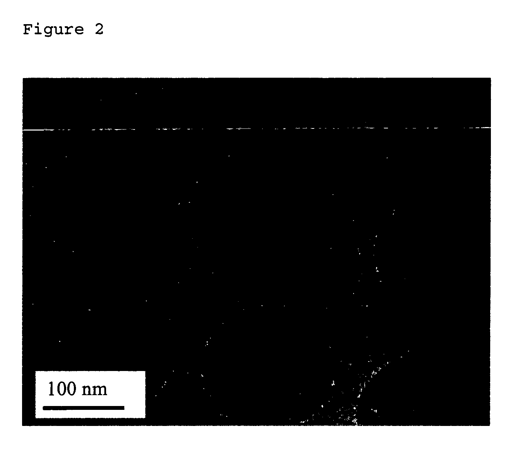

The cryo TEM image of figure 2 was obtained using the standard technique of Adrian et al (Adrian et al. Nature, (1984,) **308**: p. 32-36). A home made guillotine was used for sample freezing. A droplet of 3 µl sample dispersion was deposited onto a copper grid covered with a holy carbon film containing holes of about 2 µm in diameter. A filter paper was pressed on the liquid side of the grid (blotting) for removing excess sample solution.

Immediately after liquid removal, the grid, held by tweezers, was propelled into liquid ethane. Frozen grids were stored in liquid nitrogen and transferred into a cryo-holder kept at -180°C. Sample analysis was performed in a Philips CM12 TEM at a voltage of 80kV. Low dose procedures were applied to minimise beam damage. The ISAMULSION can be identified by the presence of small bright features inside the droplets. Figure 2 is a Cryo-TEM micrograph of a typical ISAMULSION showing characteristic distances between the bright features of about 7-8 nm. It should be noted that such bright features are not observed for standard non-structured emulsions and there is no contrast inside non-structured emulsion droplets.

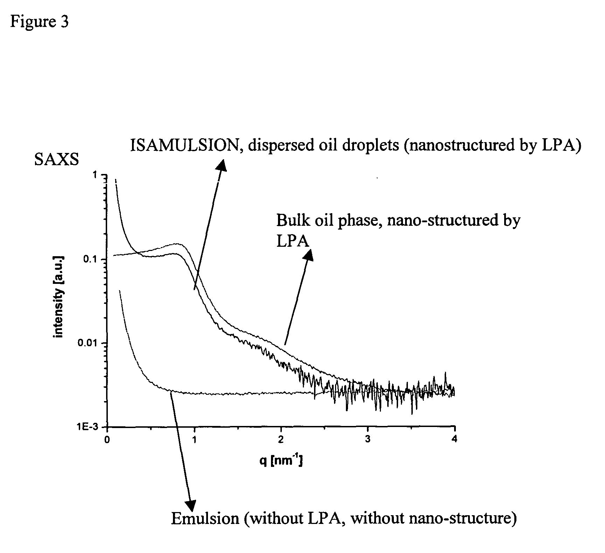

The SAXS curves of Figure 3 were obtained by a standard equipment (Bergmann et al. *J. Appl. Cryst.* (2000), **33**, 869-875), using a X-ray generator (Philips, PW 1730/10) operating at 40 kV and 50 mA with a sealed-tube Cu anode. A Göbel mirror is used to convert the divergent polychromatic X-ray beam into a focused line-shaped beam of Cu K_{α} radiation (λ = 0.154 nm). The 2D scattering pattern is recorded by an imaging-plate detector and integrated to the one-dimensional scattering function I(q) using SAXSQuant software (Anton Paar, Graz, Austria), where *q* is the length of the scattering vector, defined by q = (4π/λ)sinθ/2, λ being the wavelength and θ the scattering angle. The broad peaks of scattering profiles were desmeared by fitting these data with the Generalized Indirect Fourier Transformation method (Bergmann et al.(2000), **33**, 1212-1216). The characteristic distances are given by d = *2π*/*q.* Figure 3 shows the small angle X-ray scattering patterns of an ISAMULSION (same as investigated in Figure 2) together with the corresponding non-dispersed bulk oil phase (nano-structured by LPA) that it is made from, and the corresponding ordinary emulsion(without LPA, without nano-structure). It can be seen that the ISAMULSION shows the same peak position as the non-dispersed bulk oil phase that it is made from. The characteristic distance for both is about 7.5 nm. Moreover, for the corresponding ordinary emulsion, in which no LPA is added (no nano-structure), no peak is observed. This is an additional prove of the presence of a nano-sized self-assembled structure inside the oil droplets of an ISAMULSION. It does not change upon dispersion in water, indicating that the internal ISAMULSION droplet structure is in a thermodynamic equilibrium state. Moreover, no change in the ISAMULSION droplet nano-structure is observable even after several months of storage of the product, indicating the thermodynamic equilibrium of the internal nano-sized self-assembly droplet structure.

### EXAMPLES:

### Example 1: Generic examples of an ISAMULSION obtained by homogeneisation

Typically 1-5 wt % of a mineral oil, such as tetradecan, was introduced in water containing already 0.0375% of the emulsifier (Tween 80 or Pluronic F127). 0.5-4 wt % LPA (glycerol monolinoleate) was then added to the mixture. The total amount of lipophilic molecules (mineral oil +LPA) was 4.675wt%.

Ultrasonication was then carried out for 20 minutes. The ISAMULSION character of the emulsions was confirmed by cryo-TEM images and SAXS curves such as the ones of Fig.2 and Fig.3. Fig.2 and Fig.3 were obtained from those generic examples with a composition of 2.6wt% mineral oil-2.025wt%LPA-0.375wt% primary emulsifier(pluronic F127)- 95wt% water. The presence of an ISAMULSION was also determined for low content of LPA (e.g. 0.39wt% mineral oil (tetradecan)-0.705wt% LPA (glycerol monolinoleate), 0.375wt% emulsifier(pluronic F127)-95% water), and a peak is observed in the SAXS curve. However an ISAMULSION is not formed when no LPA is present as shown in Fig.3 (composition 0.4625wt% oil (tetradecan), 0.375wt% pluronic F127, 95wt% water).

### EXAMPLE 2: Generic examples of an ISAMULSION obtained by the hydrotrope route

1wt% emulsifier (Pluronic F127) was solubilized in 89wt% water forming the aqueous solution. 2.5wt% mineral oil (tetradecan) and 2.5wt% LPA (glycerol monolinoleate) were dissolved in 5wt% ethanol forming the lipidic solution. The aqueous solution was slowly added to the lipidic solution while vortexing. At the end of the process, the ISAMULSION, i.e., droplets with an interior nano-sized self-assembled structure has spontaneously formed.

### Example 3: An ISAMULSION containing a flavour

2wt% of oil (R+ limonene) was introduced in 95wt% water containing already 0.4 wt% emulsifier (Pluronic F127). 2.6 wt% LPA (glycerol monolinoleate) was added to the mixture. Ultrasonication was carried out for 20 minutes. A dispersion was formed. As in the case of example 1, SAXS reveals the ISAMULSION character of the emulsion.

The ISAMULSION is spontaneously formed during the ultrasonication step.

### Example 4: An ISAMULSION containing a nutrient

2wt% oil (d-alpha tocopheryl acetate) was introduced in 84.625 wt% water containing already 0.375wt% emulsifier(Pluronic F127) and 10 wt% maltodextrin. 2.5 wt% LPA (DimodanU/J, Danisco, Danmark) and 0.5% ascorbic acid were added to the mixture. Ultrasonication was then carried out for 2 minutes. As in the case of example 1, SAXS reveals the ISAMULSION character of the emulsion. The nano-sized self-assembled structure inside the oil droplets is spontaneously formed during the ultrasonication step. This ISAMULSION can be spray or freeze dried obtaining a free flowing powder, which can be redispersed into water.

## Claims

1. Oil-in-water emulsion wherein the oil droplets of a diameter in the range of 5 nm to hundreds of micrometers exhibit a nano-sized structurisation with hydrophilic domains with a diameter size in the range of 0.5 to 50 nm and being formed by a lipophilic additive.

2. Oil-in-water emulsion according to claim 1 comprising dispersed oil droplets having a nano-sized self-assembled structured interior comprising
(i) an oil selected from the group of consisting of mineral oils, hydrocarbons, vegetable oils, waxes, alcohols, fatty acids, mono-, di-, tri-acylglycerols, essential oils, flavouring oils, lipophilic vitamins, esters, neutraceuticals, terpins, terpenes and mixtures thereof.
(ii) a lipophilic additive (LPA) or mixtures of lipophilic and hydrophilic additives, having a resulting HLB value (Hydrophilic-Lipophilic Balance) lower than about 10,
(iii)hydrophilic domains in form of droplets or channels comprising of water or a non-aqueous polar liquid, such as a polyol.
and
an aqueous continous phase, which contains emulsion stabilizers or emulsifiers.

3. Oil-in-water emulsion according to any of claims 1 or 2, wherein the oil droplets have an internal structure taken in the group consisting of L2 structure, a combination of L2 and oil structure in the temperature range of 0°C to 100°C.

4. Oil-in-water emulsion according to any of claims 1 or 2, wherein the oil droplets have an L2 internal structure in the temperature range of 0°C to 100°C.

5. Oil-in-water emulsion according to claims 1 or 2, wherein the oil droplets have an internal structure taken in the group consisting of L2 structure, LC structure and a combination thereof in the temperature range of 0°C to 100°C.

6. Oil-in-water emulsion according to claims 1 or 2, wherein the oil droplets have a LC internal structure in the temperature range of 0°C to 100°C.

7. Oil-in-water emulsion according to claims 1 or 2, wherein the oil droplets have an internal structure taken in the group consisting of L3 structure, a combination of L2 and L3 structure, a combination of Lα and L2 structure, and a combination of lamellar crystalline structure and L2 structure in the temperature range of 0°C to 100°C.

8. Oil-in-water emulsion according to any of claims 1 to 7, wherein the oil droplets contain oil soluble, oil non-soluble or water soluble material selected from the group consisting of flavours, flavour precursors, drugs, nutraceuticals, selected from the group comprising of lutein, lutein esters, β-carotene, tocopherol, tocopherol acetate, tocotrienol, lycopene, Co-Q₁₀, flax seed oil, lipoic acid, vitamin B₁₂, vitamin D, α-and γ-polyunsaturated fatty acids or phytosterols, food supplements, food additives, plant extracts, medicaments, peptides, proteins or carbohydrates, nutrients, aromas, aroma precursors.

9. Oil-in-water emulsion according to any of claims 1 to 8, wherein the LPA is selected from the group of long-chain alcohols, fatty acids, pegylated fatty acids, glycerol fatty acid esters, monoglycerides, diglycerides, derivatives of mono-diglycerides, pegylated vegetable oils, sorbitan esters, polyoxyethylene sorbitan esters, propylene glycol mono- or diesters, phospholipids, phosphatides, cerebrosides, gangliosides, cephalins, lipids, glycolipids, sulfatides, sugar esters, sugar ethers, sucrose esters, sterols, polyglycerol esters.

10. Oil-in-water emulsion according to claim 9, wherein the lipophilic additive is selected from the group consisting of myristic acid, oleic acid, lauric acid, stearic acid, palmitic acid, PEG 1-4 stearate, PEG 2-4 oleate, PEG-4 dilaurate, PEG-4 dioleate, PEG-4 distearate, PEG-6 dioleate, PEG-6 distearate, PEG-8-dioleate, PEG-3-16 castor oil, PEG 5-10 hydrogenated castor oil, PEG 6-20 corn oil, PEG 6-20 almond oil, PEG-6 olive oil, PEG-6 peanut oil, PEG-6 palm kernel oil, PEG-6 hydrogenated palm kernel oil, PEG-4 capric/caprylic triglyceride, mono, di, tri, tetraesters of vegetable oil and sorbitol, pentaerythrityl di, tetra stearate, isostearate, oleate, caprylate or caprate, polyglyceryl-3 dioleate, stearate, or isostearate, plyglyceryl 4-10 pentaoleate, polyglyceryl 2-4 oleate, stearate, or isostearate, polyglyceryl 4-10 pentaoleate, polyglycewryl-3 dioleate, polyglyceryl-6 dioleate, polyglyceryl-10 trioleate, polyglyceryl-3 distearate propylene glycol mono- or diesters of C₆ to C₂₀ fatty acid, monoglycerides of C₆ to C₂₀ fatty acid, lactic acid derivatives of monoglycerides, lactic acid derivatives of diglycerides, diacetyl tartaric ester of monoglycerides, triglycerol monostearate cholesterol, phytosterol, PEG 5-20 soya sterol, PEG-6 sorbitan tetra, hexasterarate, PEG-6 sorbitan tetraoleate, sorbitan monolaurate, sorbitan monopalmitate, sorbitan mono trioleate, sorbitan mono and tristearate, sorbitan monoisostearate, sorbitan sesquioleate, sorbitan sesquistearate, PEG-2-5 oleyl ether, POE 2-4 lauryl ether, PEG-2 cetyl ether, PEG-2 stearyl ether, sucrose distearate, sucrose dipalmitate, ethyl oleate, isopropyl myristate, isopropyl palmitate, ethyl linoleate, isopropyl linoleate, poloxamers, phospolipids, lecithins, cephalins, oat lipids and lipophilic amphiphilic lipids from other plants; and mixtures thereof.

11. Oil-in-water emulsion according to any of claims 1 to 10, wherein the stabilizer or emulsifier is selected from the group of consisting of low molecular weight surfactants having a HLB>8, proteins from milk or soya, peptides, protein hydrolisates, block co-polymer, surface active hydrocolloids such as arabic gum, xanthan gum.

12. Oil-in-water emulsion according to any of claims 1 to 11, wherein it is in powder form.

13. Oil-in-water emulsion according to any of claims 1 to 11, wherein it is a final product.

14. Oil-in-water emulsion according to any of claims 1 to 13, wherein it is a starting material, an intermediate product or an additive to a final product.
